# EUROPEAN PATENT APPLICATION

(11) **EP 4 738 786 A1**
(43) Date of publication of application: **06.05.2026**
(21) Application number: 25212574.5
(22) Date of filing: 31.10.2025
(51) Int. Cl.: H04L 47/125, H04L 49/109, G06F 13/28, H04L 45/24, H04L 45/7453

(54) **RESOURCE MANAGEMENT IN A NETWORK INTERFACE CONTROLLER WITH HARDWARE LINK AGGREGATION**

(30) Priority: 01.11.2024 US 202418935263
(71) Applicant: Avago Technologies International Sales Pte. Limited, Singapore 768923 (SG)
(72) Inventor: Huang, Jeffrey Wei, Lake Forest, 92679 (US); Muppavarapu, Sudheer, 560100 Bangalore (IN)
(74) Representative: Dilg, Haeusler, Schindelmann Patentanwaltsgesellschaft mbH

(57) **Abstract**

An example network interface controller (NIC) includes: first resources configured to supply first traffic; second resources configured to supply second traffic; a load balancer, coupled to the first and second resources, configured to balance the first traffic and the second traffic between first and second port circuits of a link aggregation group (LAG) using a hash function; and remote direct memory access (RDMA) logic configured to, using the hash function, divide work requests into a first set of work requests for first packets that hash to the first port circuit and a second set of work requests for second packets that hash to the second port circuit, the RDMA logic configured to supply the first set of work requests to the first resources and the second set of work requests to the second resources.

## Description

### BACKGROUND

A network interface controller (NIC) may be a hardware component in a computer that connects the computer to a computer network. A computer may be an electronic device for storing and processing data. A computer network (hereinafter referred to as a network) may be a system that connects computers. A NIC can include a port circuit that couples the NIC to a transmission medium of the network. A port circuit (hereinafter referred to as a port) can be a circuit that provides a point of data ingress (e.g., data input), data egress (e.g., data output), or both. For example, a port of a NIC can include a physical layer circuit (PHY) among other circuits (examples discussed below). A PHY may be a circuit, such as a transceiver, which implements physical layer functions, e.g., layer 1 of the Open Systems Interconnection (OSI) model. Some NICs can include multiple ports.

A NIC with multiple ports can include multiple connections to the network (where the connections can be referred to as links). Link aggregation may be the combining (referred to as aggregating) of multiple links. A link aggregation group (LAG) may be a logical entity representing an aggregation of multiple links. A NIC can group ports thereof to provide one end of the LAG. A network device connected to the NIC can group some of its ports to provide the other end of the LAG. Other terms known in the art to describe the concept of link aggregation include trunking, bundling, bonding, channeling, and teaming. For clarity by example, the description herein will use the term link aggregation. Link aggregation can increase total throughput with respect to use of a single link and can provide redundancy, where all by one of the links can fail without losing network connectivity.

The NIC can include hardware that supports a LAG (hereinafter referred to as LAG hardware). The LAG hardware can balance the transmission of traffic among the ports of the LAG. A NIC can include a set of transmission resources for each port. Types of transmission resources are discussed further below. At least a portion of the transmission resources can be a pipeline. A pipeline may be a set of resources connected in series, where the input of one resource depends on the output of another resource. The LAG hardware can balance traffic supplied by sets of transmission resources among ports of a LAG. For example, a NIC can include two ports designated A and B as part of a LAG and two transmission resource sets designated 1 and 2. The LAG hardware can balance traffic supplied by transmission resource set 1 between the ports A and B (e.g., packets from transmission resource set 1 can sometimes be transmitted by port A and other times be transmitted by port B). The LAG hardware can also balance packets supplied by transmission resource set 2 between the ports A and B (e.g., packets from transmission resource set 2 can sometimes be transmitted by port A and other times be transmitted by port B).

The NIC can be coupled to an expansion bus of the computer. Peripheral Component Interconnect Express (PCIe) is a well known and widely used standard for an expansion bus in a computer. In PCIe architecture, a peripheral device can present as multiple logical devices, where each logical device can be referred to as a function (or PCIe function). Each function can have its own configuration space, resources, and capabilities presented to software in the computer. A NIC, for example, can have separate functions for each port, where each of the functions includes a separate set of transmission resources. Thus, continuing the example above, the NIC can have a function A for the port A having, for example, the transmission resource set 1, and a function B for the port B having, for example, the transmission resource set 2.

Software in a computer can be unaware that some ports of a NIC are part of a LAG. Continuing the example above, the software can provide a sequence of first packets and then second packets to NIC via function A to be transmitted via the port A. The NIC can process the first and second packets through transmission resource set 1 associated with function A. The LAG hardware can determine that the second packets are to be transmitted via the port A as expected by the software. The LAG hardware, however, can determine that the first packets are to be transmitted via the port B of the LAG unbeknownst to the software. Thus, the software cannot arrange ahead of time which port of NIC transmits which packets.

The NIC can include flow control functionality, where ports can temporarily pause transmission of packets to prevent congestion in the network. In the example, the port B can pause transmission of packets. In such case, the first packets stall in transmission resource set 1 waiting for port B to resume packet transmission. The second packets can be behind the first packets in the transmission resource set 1 waiting for further processing (e.g., the second packets can be behind the first packets in a pipeline). The processing of the second packets in the transmission resource set 1 can be blocked by the processing of the first packets, which cannot be completed. This blocking is a phenomenon referred to as head-of-line (HOL) blocking. HOL blocking can affect the performance of a NIC in a computer.

### SUMMARY

In an embodiment, a network interface controller (NIC) can include first resources configured to supply first traffic and second resources configured to supply second traffic. The NIC can include a load balancer, coupled to the first and second resources, configured to balance the first traffic and the second traffic between first and second port circuits of a link aggregation group (LAG) using a hash function. The NIC can include remote direct memory access (RDMA) logic configured to, using the hash function, divide work requests into a first set of work requests for first packets that hash to the first port circuit and a second set of work requests for second packets that hash to the second port circuit. The RDMA logic can be configured to supply the first set of work requests to the first resources and the second set of work requests to the second resources.

In another embodiment, a method of managing resources in a network interface controller (NIC) in a computer can include supplying first traffic from first resources of the NIC and supplying second traffic from second resources of the NIC. The method can include balancing the first traffic and the second traffic between first and second port circuits of a link aggregation group (LAG) using a hash function. The method can include dividing, using the hash function at remote direct memory access (RDMA) logic of the NIC, work requests into a first set of work requests for first packets that hash to the first port circuit and a second set of work request for second packets that hash to the second port circuit. The method can include supplying the first set of work requests to the first resources and supplying the second set of work request to the second resources.

In another embodiment, a computer can include a hardware platform including a central processing unit (CPU), memory, and a network interface controller (NIC). The computer can include software executing on the hardware platform. The NIC can include first resources configured to supply first traffic and second resources configured to supply second traffic. The NIC can include a load balancer, coupled to the first and second resources, configured to balance the first traffic and the second traffic between first and second port circuits of a link aggregation group (LAG) using a hash function. The NIC can include remote direct memory access (RDMA) logic configured to, using the hash function, divide work requests from the software into a first set of work requests for first packets that hash to the first port circuit and a second set of work requests for second packets that hash to the second port circuit. The RDMA logic can be configured to supply the first set of work requests to the first resources and the second set of work requests to the second resources.

### BRIEF DESCRIPTION OF THE DRAWINGS

Fig. 1 is a block diagram depicting a communication system according to some embodiments.
Fig. 2 is a block diagram depicting a computer according to some embodiments.
Fig. 3 is a block diagram depicting a NIC according to some embodiments.
Fig. 4 is a block diagram depicting a logical view of a NIC according to some embodiments.
Fig. 5 is a flow diagram depicting a method of managing traffic in a NIC according to some embodiments.

### DETAILED DESCRIPTION

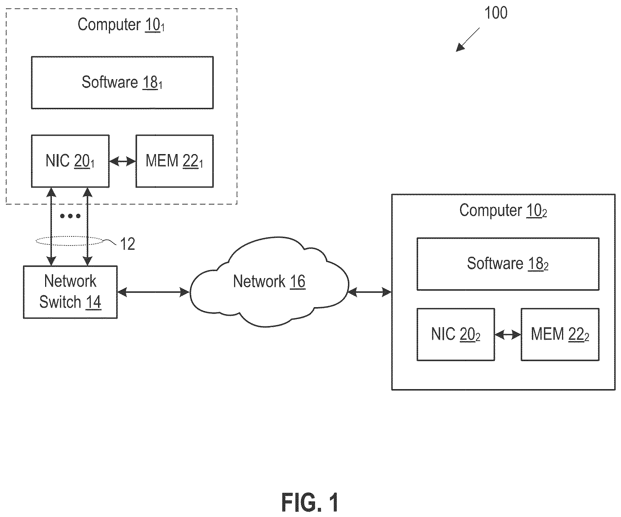

Fig. 1 is a block diagram depicting a communication system 100 according to some embodiments. Communication system 100 can include computers connected to a network 16, e.g., computers 10₁ and 10₂. Network 16 can include resources provided by network nodes and shared by computers 10₁ and 10₂ that enable communication therebetween. A network node may be a connection point in a network. Example network nodes include network switches, network hubs, network bridges, network routers, wireless access points, and the like. The scope of a network can differ depending on context. For example, a network can be computers connected to a single network switch. A network switch may be a component that performs switching, that is, connecting devices such as computers and network nodes to one another. Computer 10₁ can be coupled to network 16 via network switch 14. A network can be computers connected to multiple switches. A network can be computers connected to one or more switches and a network router. A network router (also referred to as a router) may be a network node that can connect multiple switches and hence form a larger network. A network can be devices and network nodes disposed at a location, which can be referred to as a local area network (LAN). A network can be multiple connected LANs, which can be referred to as a wide area network (WAN). The public Internet is an example of a WAN. As used herein, the term network can have any scope unless otherwise confined, such as by location, by type, by a set of network nodes, etc. In the example, computer 10₁ can communicate with computer 10₂ via network switch 14 and other network nodes collectively shown as network 16. In another example, computers 10₁ and 10₂ can be coupled to the same network switch (e.g., network switch 14) or more generally the same network node.

Computer 10₁ can include a NIC 20₁ and memory 22₁ (shown as MEM 22₁). Memory may be device(s) that provide primary storage for a computer. Primary storage in a computer may be storage directly accessed by its central processing unit (CPU) through data and address busses. A well-known and widely used device for memory in a computer is a random-access memory (RAM). Memory 22 can also be accessed by NIC 20₁ using direct memory access (DMA). DMA may be a feature of a computer that allows hardware subsystems, e.g., a NIC, to read from and write to the memory without interrupting the processing of the computer's CPU. Computer 10₁ can include software 18₁ executing thereon. Software 18₁ and NIC 20₁ can exchange data through memory 22₁ using DMA. Software 18₁ can store data in memory 22₁. NIC 20₁ can use DMA to read the data from memory 22₁ and transmit the data over the network, e.g., to computer 10₂. Software 18₁ can allocate space in memory 22₁ for data. NIC 20₁ can receive the data over the network, e.g., from computer 10₂, and use DMA to write the data to the allocated space in memory 22₁.

NIC 20₁ can include multiple ports connected to network switch 14. NIC 20₁ can include LAG hardware configured to group ports of NIC into a LAG. Network switch 14 can likewise be configured to group some ports into a LAG. In the example, NIC 20₁ can be connected to network switch 14 via a LAG 12.

Computer 10₂ can include NIC 20₂ and memory 22₂ (shown as MEM 22₂). Computer 10₂ can include software 18₂ executing thereon. Similar to computer 10₁, software 18₂ and NIC 20₂ can exchange data through memory 22₂ using DMA.

In some embodiments, software 18₁ can communicate with software 18₂ using remote direct memory access (RDMA). RDMA may be DMA between computers on a network. RDMA can be used to exchange data between software 18₁ and software 18₂ without interrupting the processing of the computers' CPUs. Transferring data using RDMA can be performed using a sequence of operations (hereinafter referred to as RDMA operations). NICs 20₁ and 20₂ can include hardware that can perform at least some RDMA operations. Software 18₁ and 18₂ can offload RDMA operations to NIC 20₁ and NIC 20₂, respectively. Offloading may be shifting responsibility for operations from one entity to another, e.g., from software to NIC. For example, NICs 20₁ and 20₂ can handle packet processing, sequencing, acknowledgement, and the like for RDMA between computers 10₁ and 10₂.

NICs 20₁ and 20₂ can transmit and receive network traffic. Network traffic (hereinafter referred to as traffic) may be a quantum of packets transmitted or received over a given time. A packet may be a formatted unit of data. The data of a packet can be divided into control data and payload data, where the control data can provide information for delivering the payload data. Traffic can be transmitted and received using protocols at different network layers (e.g., different layers of the OSI model). A protocol data unit (PDU) may be a unit of data transmission for a given network layer. Different network layers can specify different types of PDUs. The term packet as used herein may refer to a PDU of the data link layer or the network layer. Packets of one layer can be encapsulated in packets of another layer. For example, a frame may be a PDU of the data link layer (e.g., OSI layer 2) and an Internet Protocol (IP) packet may be a PDU of the network layer (e.g., OSI layer 3). A frame can encapsulate an IP packet (e.g., the payload of a frame can be an IP packet). The term frame as used herein can specifically refer to a PDU of the data link layer (e.g., OSI layer 2).

RDMA communication between computers 10₁ and 10₂ can be performed using different network protocols supported by NICs 20₁ and 20₂, network switch 14, and network 16. For example, Internet Wide Area RDMA Protocol (iWARP) can implement RDMA using standard Transmission Control Protocol/Internet Protocol (TCP/IP). In another example, RDMA over Converged Ethernet (RoCE) can enable RDMA over Ethernet. In another example, InfiniBand (IB) can enable RDMA using its own set of protocols for OSI layers 2, 3, and 4. Ethernet is a well-known and widely used protocol for exchanging data in networks (e.g., an implementation of OSI layer 2). Conventional Ethernet is designed to be a best-effort network that may experience packet loss when the network or computers connected thereto are busy. It can be the responsibility of upper network layers, such TCP, to ensure reliability in data exchange. Converged Ethernet is an evolution of Ethernet to provide reliability in data transfer at the data link layer (e.g., OSI layer 2) without requiring the complexity of the upper network layer (e.g., TCP or OSI layer 4). Converged Ethernet is a set of technologies and protocols defined in IEEE 802.3 standards that combine to reduce packet loss at the data link layer (sometimes referred to as "lossless Ethernet"). One such standard, IEEE 802.1Qbb, provides for link-level flow control, as discussed further below.

In some embodiments, NICs 20₁ and 20₂ can support RoCE. For example, one version of RoCE (known in the art as RoCE v1) is a link layer protocol and allows communication between any two computers in the same Ethernet broadcast domain. A broadcast domain may be a logical division of a network in which all nodes can reach each other by broadcast (e.g., transferring traffic from one node in the logical network division to all nodes in the logical network division). An Ethernet broadcast domain may be a broadcast domain of the data link layer. Another version of RoCE (known in the art as RoCE v2) is a network layer protocol (e.g., OSI layer 3 protocol), which allows traffic to be routed.

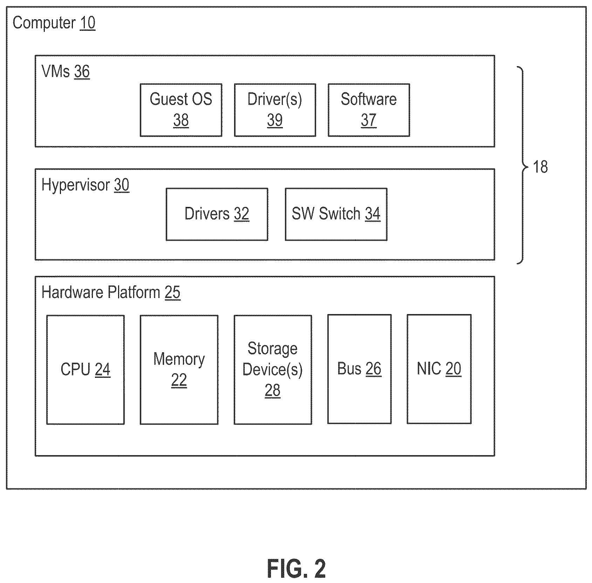

Fig. 2 is a block diagram depicting a computer 10 according to some embodiments. Computers 10₁ and 10₂ of Fig. 1 can be implemented as shown and described for computer 10. Computer 10 can include software executing on a hardware platform 25. Hardware platform 25 can include conventional computer components, such as a central processing unit (CPU) 24, memory 22, storage device(s) 28, and network interface controller 20, among other well-known components. A CPU may be a circuit that executes instructions of program(s). Software may be programs executed by a CPU. CPU 24 can be implemented using one or more integrated circuits (ICs). CPU 24 can execute instructions of the software, for example, instructions that perform one or more operations described herein, which may be stored in memory 22. Memory 22 can provide primary storage for computer 10 (e.g., RAM or the like). Storage device(s) 28 can provide secondary storage for computer 10 (e.g., storage device(s) 28 can be HDDs or SSDs or the like). Secondary storage may be storage indirectly accessed by a CPU of a computer through an input/output (IO) subsystem. Well-known and widely used IO subsystems for secondary storage include Serial Advanced Technology Attachment (SATA) and Nonvolatile Memory Express (NVMe). NIC 20 and storage device(s) 28 can be coupled to CPU 24 and memory 22 through a bus 26. Bus 26 may be an expansion bus operating according to an expansion bus standard. In some embodiments, bus 26 can be an expansion bus based on a PCIe standard (a PCIe bus). Bus 26 can be compliant with other standards in addition to or in place of PCIe, such as Compute Express Link (CXL).

Computer 10 includes software 18 that manages hardware platform 25. In some embodiments, software 18 includes hypervisor 30 managing virtual machines (VMs) 36. Virtualization in a computer may be abstraction, by software, of physical components of the computer into virtual components. The physical components can include CPU, memory, storage, and network components. This abstraction can allow multiple operating systems and applications to execute concurrently on a single computer within isolated VMs. A hypervisor may be software that manages virtualization on a computer, e.g., the creation and operation of VMs. Hypervisor 30 can manage virtualization of hardware platform 25 for VMs 36.

A VM may be software and data that exhibits the behavior of a computer. A VM can include virtual hardware, which may be abstractions of the computer's physical hardware created and managed by the hypervisor. Virtual hardware can include virtual CPU, virtual memory, virtual storage, and virtual network components, each of which may be abstractions created by the hypervisor and supported by corresponding physical components. An operating system (OS) may be software that manages resources and provides common services for other software to access the resources. The resources managed by an OS can be physical hardware of a computer (e.g., the hypervisor can be a type of operating system). A guest operating system (guest OS) may be an operating system executing on the computer concurrently with the hypervisor, but where the managed resources include virtual hardware of a VM. A computer can execute multiple VMs and hence multiple guest operating systems. A guest OS can manage access to the virtual hardware by other software. Guest software may be software executing in the context of a VM, e.g., a guest OS and the other software managed by the guest OS. Each VM 36 can execute guest software 38.

Hypervisor 22 can include drivers 32. A driver may be software that provides an interface, for use by other software, in accessing a physical device or logical device. Each driver 32 can provide an interface to a physical function (PF) of NIC 20. Devices connected to bus 26 can present multiple logical devices referred to herein as functions (e.g., PCIe functions). NIC 20 can present multiple functions respectively for multiple ports (e.g., each port is associated with a function). In some embodiments, NIC 20 can support single root IO virtualization (SR-IOV). SR-IOV is an extension to PCIe that allows a single PCIe physical device under a single root to appear as multiple separate physical devices to a hypervisor or guest operating systems. Functions under SR-IOV can be divided into physical functions (PFs) and virtual functions (VFs). PFs may be full PCIe functions. VFs may be controlled PCIe functions, where the hypervisor can provide the control. With SR-IOV, each physical port of NIC 20 can be associated with one PF, and the PF can support one or more VFs.

The guest software in a VM can include a guest OS 38, drivers 39, and software 37 managed by guest OS 38. Software 37 and guest OS 38 can use drivers(s) 39 to interface with virtual NIC(s) presented by hypervisor 30. Ports of virtual NIC(s) can be coupled to ports of a software switch 34 (shown as SW switch 34) in hypervisor 30. A software switch can be software that implements the functionality of a network switch. Software switch 34, a software component of hypervisor 30, can interface with NIC 20 through drivers 32 and PFs. If SR-IOV is used, driver(s) 39 of a VM 36 can interface directly with NIC 20 through VF(s) (e.g., a data path between driver(s) 39 and NIC 20 can exclude software switch 34).

In the example, computer 10 is virtualized, e.g., includes hypervisor 30 and VMs 36. In other embodiments, computer 10 can be non-virtualized. In such an embodiment, hypervisor 30 and VMs 36 are omitted. Instead, the software of computer 10 can include an OS executing on and managing hardware platform 25 (e.g., any commodity OS known in the art, such as Microsoft WINDOWS, LINUX, or the like). The OS or any software managed by the OS can interface with NIC 20 through drivers 32 and PFs. Software 18₁ and 18₂ in Fig. 1 can be implemented as described for software 18.

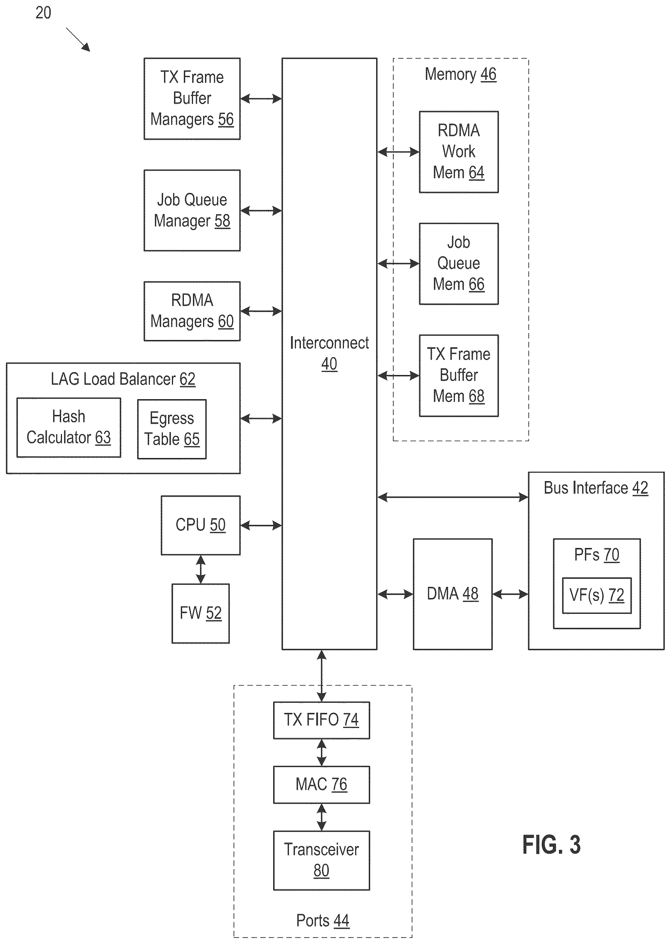

Fig. 3 is a block diagram depicting a NIC 20 according to some embodiments. NICs 20₁ and 20₂ of Fig. 1 can be implemented as shown and described for NIC 20. NIC 20 can include ports 44. Each port 44 can include a transmission first-in-first-out circuit (FIFO) 74 (shown as TX FIFO 74), a media access control (MAC) circuit 76 (shown as MAC 76), and a transceiver 80. A transceiver may be a circuit that can send and receive signals. Transceiver 80 can implement a PHY. A MAC circuit may be a circuit that implements OSI layer 2 functions (e.g., data link layer functions such as Ethernet functions). A FIFO may be a circuit implementing a queue where data first inserted into the queue is the first to leave the queue.

NIC 20 can include an interconnect 40. An interconnect may be a circuit that connects and enables communication between components. The input of TX FIFO 74 can be coupled to interconnect 40. The output of TX FIFO 74 can be coupled to MAC 76. MAC 76 can be coupled to transceiver 80. A transmit path of physical port 44 can include TX FIFO 74 to MAC 76 and MAC to transceiver 80. For purposes of clarity, a receive paths in ports 44 and components specifically used for receiving data in NIC 20 are omitted.

NIC 20 can include a memory 46. Memory 46 can be RAM or the like. Memory 46 can be coupled to interconnect 40. Memory 46 can include different regions or different circuits that store different types of data. Memory 46 can include a transmission frame buffer memory 68 (shown as TX frame buffer mem 68). NIC 20 can include transmission frame buffer managers (shown as TX frame buffer managers 46) configured to manage TX frame buffer memory 68. TX frame buffer managers 56 can be coupled to interconnect 40. TX frame buffer memory 68 can store TX frame buffers, each of which can store frames. Each TX frame buffer manager 56 can manage a separate TX frame buffer in TX frame buffer memory 68.

Memory 46 can include job queue memory 66 (shown as job queue mem 66). NIC 20 can include a job queue manager 58 configured to manage job queue memory 66. Job queue memory 66 can store job queues. A job queue may be a queue that stores jobs to be performed by NIC 20. A job can be a sequence of operations to be performed. For example, a job can be an operation to read data from memory 22 using DMA and an operation to create a packet having the data. Job queue manager 58 can manage queueing and dequeuing of jobs in job queues stored in job queue memory 66. Job queue manager 58 can be coupled to interconnect 40.

Memory 46 can include RDMA work memory 64 (shown as RDMA work mem 64). RDMA managers 60 can manage RDMA work memory 64. RDMA work memory 64 can store RDMA work units as discussed further herein. Each RDMA manager 60 can manage RDMA work for a PF of NIC 20. RDMA managers 60 can be coupled to interconnect 40.

NIC 20 can include a load balancer 62 for balancing LAGs (shown as LAG load balancer 62). LAG load balancer 62 can include a hash calculator 63 and an egress table 65. Hash calculator 63 can implement a hash function. A hash function may be a mathematical function or algorithm that takes a variable number of input bits and generates an output having a fixed number of output bits. In some embodiments, LAG load balancer 62 selects the input bits to the hash function of hash calculator 63 from control data in packets. LAG load balancer 62 can use the output of the hash function as an index to egress table 65. Egress table 65 can map hash values to physical ports. LAG load balancer 62 can be coupled to interconnect 40.

NIC 20 can include a bus interface 42. A bus interface may be a circuit that interfaces a bus (e.g., a PCIe bus). Bus interface 42 can include circuits for PFs 70. Each PF 70 can implement one or more VFs 72. NIC 20 can include a DMA manager 48 (shown as DMA 48). A DMA manager may be a circuit that manages DMA. NIC 20 can use DMA 48 to write and read data from memory 22 via bus interface 42 using DMA. Bus interface 42 can be coupled to interconnect 40 and to DMA 48. DMA 48 can be coupled to interconnect 40.

NIC 20 can include a CPU 50 and firmware 52 (shown as FW 52). Firmware can be programs stored in a memory, such as a non-volatile memory. CPU 50 can execute the programs stored in firmware 52.

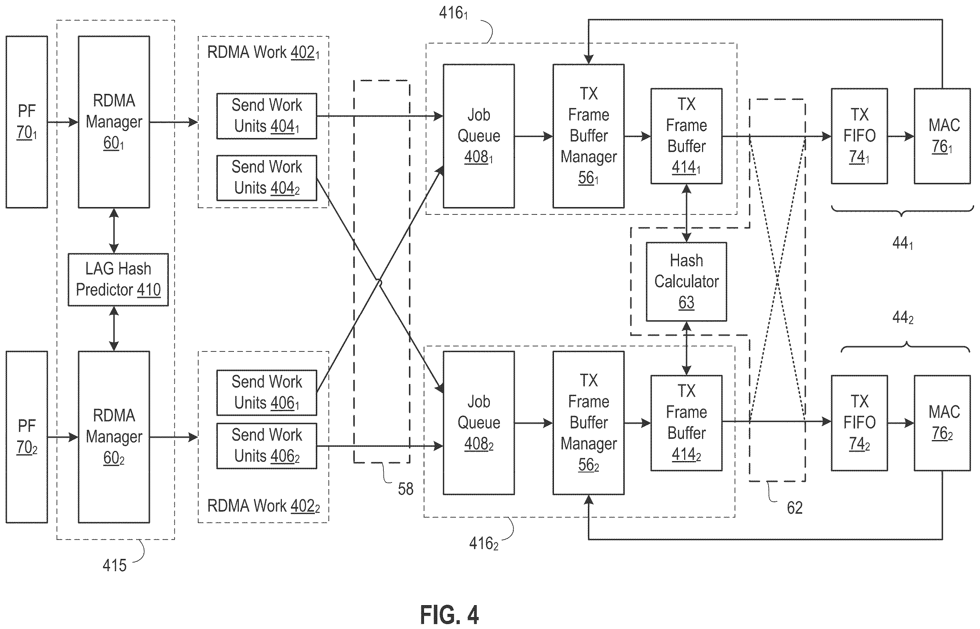

Fig. 4 is a block diagram depicting a logical view of NIC 20 according to some embodiments. In the example shown, NIC 20 can include two ports 44₁ and 44₂. Port 44₁ can include TX FIFO 74₁ and MAC 76₁. Port 44₂ can include TX FIFO 74₂ and MAC 76₂. Transceivers 80 of ports 44₁ and 44₂ are omitted for brevity. NIC 20 can present two logical devices, one for each port 44₁ and 44₂. Software can access one logical device through PF 70₁ and the other logical device through PF 70₂.

Software can interact with RDMA logic 415. RDMA logic may be components that perform RDMA operations. RDMA logic 415 can include RMDA managers 60₁ and 60₂ and a LAG hash predictor 410. RDMA manager 60₁ can handle RDMA on behalf of PF 70₁ and RDMA manager 60₂ can handle RDMA on behalf of PF 70₂. For example, software can interact with an application programming interface (API) for RDMA operations, such as the API provided by the well-known 'libibverbs' library or the like. The API can include operations such as creating a completion queue, creating a queue pair, exchanging identifier information to establish an RDMA connection, changing the queue pair state, registering memory regions, exchanging memory region information, and performing data communications. The API operations can be captured by drivers 32, which interact with RDMA manager 60₁ or RDMA manager 60₂ to perform the operations.

RDMA manager 60₁ can be tasked with RDMA work 402₁, and RDMA manager 60₂ can be tasked with RDMA work 402₂. RDMA work may be units of work to implement RDMA operations. RDMA operations can be defined with respect to some data structures. A work queue may be a queue that stores work request. A work request may be a task description, which can be provided by the software. The task description can include tasks delegated to NIC 20 to perform. For example, a task can be "send data located at memory address ADDRESS with a length of LENGTH." Software can add work requests to a work queue and RDMA logic 415 can extract work requests from a work queue. A send queue may be a work queue for work requests that are send tasks. A receive queue may be a work queue for work requests that are receive tasks. A queue pair (QP) may be a pair of work queues, e.g., a pair of a send queue and a receive queue. An RDMA connection may be an association between QPs, e.g., one QP in one computer and another QP in another computer. Each QP can have a unique identifier, referred to as a queue pair number (QPN). A queue pair context (QPC) may store properties of a QP, including its state, any information associated with its state, number of queued work requests, address information for queued work requests, and the like. A QP can have various states, such as reset, initialized, ready to receive, ready to send, error, etc. RDMA operations can include creating a QP, establishing a connection between QPs, modifying QP state, and performing send and receive tasks through work requests.

RDMA manager 60₁ can maintain QPCs for software connected to NIC 20 through PF 70₁. RDMA manager 60₂ can maintain QPCs for software connected to NIC 20 through PF 70₂. In terms of transmission from NIC 20, RDMA manager 60₁ can determine units of work for sending data (shown as send work units). Send work units can be, for example, work requests in send queues of QPs that describe send tasks. Each send work unit can encapsulate one or more of such work requests. A send work unit can include memory address(es) for payload data to be sent and control data for sending the payload data (e.g., source/destination address information and the like).

LAG hash predictor 410 can perform the same hash calculation as hash calculator 63. As described above, hash calculator 63 can use input bits from control data in the packets as the input to the hash function. LAG hash predictor 410 can use input bits from the same control data. The source of the control data can be QPCs, work requests, or a combination thereof (e.g., the same control data that will be inserted into the packets during packet assembly). Thus, LAG hash predictor 410 can predict the output of hash calculator 63 for traffic to be assembled for each send work unit. Using output from LAG hash predictor 410, RDMA manager 60₁ can group send work units 404₁ and send work units 404₂. Send work units 404₁ can be those for which traffic will be assembled and load balanced to port 44₁. Send work units 404₂ can be those for which traffic will be assembled and load balanced to port 44₂. Likewise, using output from LAG hash predictor 410, RDMA manager 60₂ can group send work units 406₁ and send work units 406₂. Send work units 406₁ can be those for which traffic will be assembled and load balanced to port 44₁. Send work units 406₂ can be those for which traffic will be assembled and load balanced to port 44₂. LAG hash predictor 410 can obtain egress table 65 from LAG load balancer 62 in order to identify which ports are mapped to outputs of the hash function. LAG hash predictor 410 can be a hardware component in NIC 20. Alternatively, LAG hash predictor 410 can be implemented by CPU 50 executing firmware 52.

A job queue 408₁, a TX frame buffer manager 56₁, and a TX frame buffer 414₁ can be a set of transmission resources 416₁ mapped to PF 70₁. A job queue 408₂, a TX frame buffer manager 56₂, and a TX frame buffer 414₂ may be a set of transmission resources 416₂ mapped to PF 70₂. Job queue 408₁ can store jobs. A job may be description of a task to be performed by to assemble traffic. Job queue 408₁ can store jobs generated from send work units 404₁ and send work units 406₁. Job queue 408₂ can store jobs generated from send work units 404₂ and send work units 406₂. The jobs can be generated from the respective work units by RDMA managers 60, job queue manager 58, or through cooperation of RDMA managers 60 with job queue manager 58. Each job in job queue 408₁ can control TX frame buffer manager 56₁ to assemble traffic in TX frame buffer 414₁. Each job in job queue 408₂ can control TX frame buffer manager 56₂ to assemble traffic in TX frame buffer 414₂. TX frame buffer managers 56₁ and 56₂ can retrieve payload data for packets from memory using DMA 48. TX frame buffer managers 56₁ and 56₂ can insert control data for packets from the jobs.

Load balancer 62 balances traffic from TX frame buffer 414₁ and TX frame buffer 414₂ between ports 44₁ and 44₂. Hash calculator 63 can obtain input for the hash function from control data of the packets in TX frame buffer 414₁ and TX frame buffer 414₂. Without LAG hash predictor 410, load balancer 62 can direct some traffic from TX frame buffer 414₁ to TX FIFO 74₁ and other traffic from TX frame buffer 414₁ to TX FIFO 74₂. Likewise, without LAG hash predictor 410, load balancer 62 can direct some traffic from TX frame buffer 414₂ to TX FIFO 74₁ and other traffic from TX frame buffer 414₂ to TX FIFO 74₂. However, since LAG has predictor 410 was used to group send work units, the jobs in job queue 408₁ assemble packets that are hashed to port 44₁ and the jobs in job queue 408₂ assembly packets that are hashed to port 44₂. In case of ideal prediction (no errors), then no packets from transmission resources 416₁ are directed to port 44₂ and no packets from transmission resources 416₋₂ are directed to port 44₁.

MAC 76₁ can implement flow control for port 44₁. MAC 76₂ can implement flow control for port 44₂. For example, priority flow control (PFC) as defined in IEEE 802.1Qbb is a mechanism for Ethernet link partners to signal that congestion is occurring and to temporarily stop transmission to avoid packet drops. MAC 76₁ and MAC 76₂ can implement PFC or any similar flow control mechanism to pause transmission of packets from port 44₁ and port 44₂, respectively. In case transmission is paused for port 44₁, MAC 76₁ can signal TX frame buffer manager 56₁ so that packet assembly in transmission resources 416₁ is paused. Likewise, in case transmission is paused for port 44₂, MAC 76₂ can signal TX frame buffe manager 56₂ so that packet assembly in transmission resources 416₂ is paused. MAC 76₁ can resume packet assembly in transmission resources 416₁ when transmission is resumed on port 44₁. MAC 76₂ can resume packet assembly in transmission resources 416₂ when transmission is resumed on port 44₂.

Since TX frame buffer 414₁ can include only packets that are hashed to port 44₁, then if port 44₁ is paused, then there are no packets in TX frame buffer 414₁ blocked from being transmitted by port 44₂. Likewise, since TX frame buffer 414₂ can include only packets that are hashed to port 44₂, then if port 44₂ is paused, then there are no packets in TX frame buffer 414₂ blocked from being transmitted by port 44₁. Use of LAG hash predictor 410 to group the send work units can eliminate or mitigate HOL blocking in transmission resources 416₁ and 416₂.

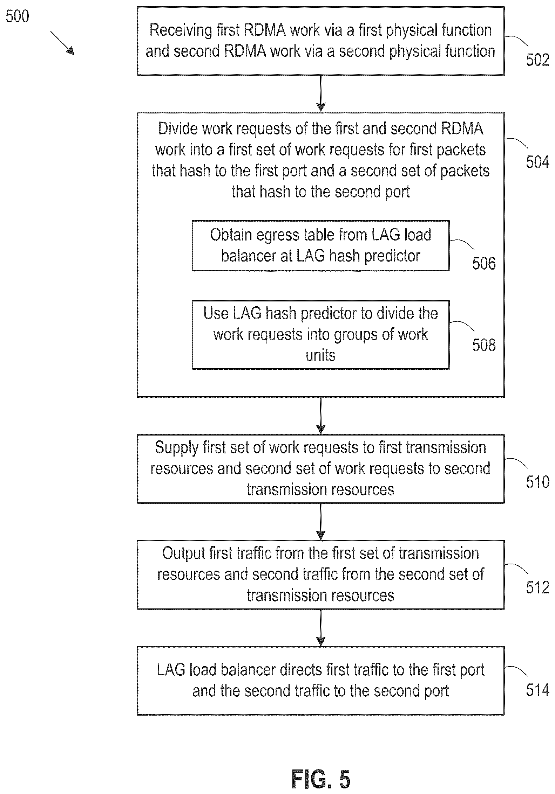

Fig. 5 is a flow diagram depicting a method of managing traffic in a NIC according to some embodiments. Method 500 begins at step 502, where RDMA manager 60₁ receives RDMA work 402₁ (first RDMA work) via PF 70₁ (first physical function). RDMA manager 60₂ receives RDMA work 402₂ (second RDMA work) via PF 70₂ (second physical function). At step 504, RDMA logic 415 divides work requests of RDMA work 402₁ and 402₂ into a first set of work requests for first packets that hash to port 44₁ (the first port) and a second set of packets that hash to port 44₂ (the second port). RDMA logic 415 can obtain egress table 65 from LAG load balancer 62 (step 506). RDMA logic 415 can use LAG hash predictor 410 to divide the work requests into groups of work units (step 508). The first set of work requests can include send work units 404₁ and send work units 406₂. The second set of work request can include send work units 404₂ and send work units 406₂.

At step 510, RMDA logic 415 can supply the first set of work requests (e.g., send work units 404₁ and send work units 406₁) to transmission resources 416₁ (first set of transmission resources). RDMA logic 415 can supply the second set of work requests (e.g., send work units 404₂ and send work units 406₂) to transmission resources 416₂ (the second set of transmission resources.). At step 512, transmission resources 416₁ can output first traffic and transmission resources 416₂ can output second traffic. At step 514, LAG load balancer 62 can direct the first traffic to port 44₁ (the first port) and the second traffic to port 44₂ (the second port).

While some processes and methods having various operations have been described, one or more embodiments also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations.

One or more embodiments of the present invention may be implemented as one or more computer programs or as one or more computer program modules embodied in computer readable media. The term computer readable medium refers to any data storage device that can store data which can thereafter be input to a computer system. Computer readable media may be based on any existing or subsequently developed technology that embodies computer programs in a manner that enables a computer to read the programs. Examples of computer readable media are hard drives, NAS systems, read-only memory (ROM), RAM, compact disks (CDs), digital versatile disks (DVDs), magnetic tapes, and other optical and non-optical data storage devices. A computer readable medium can also be distributed over a network-coupled computer system so that the computer readable code is stored and executed in a distributed fashion.

As used herein, the phrase "at least one of" preceding a series of items, with the term "and" or "or" to separate any of the items, modifies the list as a whole, rather than each member of the list (i.e., each item). The phrase "at least one of' does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C ," or alternatively, "at least one of A, at least one of B, and at least one of C," it is expressly described as such.

It will be understood that, although the terms "first," "second," etc. may be used herein to describe various elements, these elements should not be limited by these terms. These terms are only used to distinguish one element from another. For example, a first element could be termed a second element, and, similarly, a second element could be termed a first element, without departing from the scope of the present disclosure.

As used herein, the term "couple" or "connect" and its derivatives include: (a) electrical and communicative coupling; and (b) do not imply a direct connection, but rather may include intervening elements, unless described as "directly coupled" or "directly connected."

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and/or steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components in exemplary configurations may be implemented as a combined structure or component. Similarly, structures and functionalities presented as a single component may be implemented as separate components. These and other variations, additions, and improvements may fall within the scope of the appended claims.

## Claims

1. A network interface controller (NIC), comprising:
first resources configured to supply first traffic;
second resources configured to supply second traffic;
a load balancer, coupled to the first and second resources, configured to balance the first traffic and the second traffic between first and second port circuits of a link aggregation group (LAG) using a hash function; and
remote direct memory access (RDMA) logic configured to, using the hash function, divide work requests into a first set of work requests for first packets that hash to the first port circuit and a second set of work requests for second packets that hash to the second port circuit, the RDMA logic configured to supply the first set of work requests to the first resources and the second set of work requests to the second resources.

2. The NIC of claim 1, further comprising:
a bus interface having a first physical function and a second physical function;
wherein the RDMA logic, in response to first RDMA work received via the first physical function, is configured to add a portion of the first set of work requests for a portion of the first packets to a first group and add a portion of the second set of work requests for a portion of the second packets to a second group;
wherein the RDMA logic, in response to second RDMA work received via the second physical function, is configured to add another portion of the first set of work requests for another portion of the first packets to a third group and add another portion of the second set of work requests for another portion of the second packets to a fourth group.

3. The NIC of claim 2, wherein
the first and third groups are configured to input to the first resources, and wherein the second and fourth groups are configured to input to the second resources.

4. The NIC of any one of the claims 1 to 3, wherein
the first set of resources include a first queue configured to receive the first set of work requests and a first buffer configured to assemble the first packets based on the first set of work requests, and wherein the second resources include a second queue configured to receive the second set of work requests and a second buffer configured to assume the second packets based on the second set of work requests.

5. The NIC of any one of the claims 1 to 4, wherein
the RDMA logic includes a hash calculator configured to use the hash function to divide the work requests.

6. The NIC of claim 5, wherein
the hash calculator comprises firmware executed by a central processing unit (CPU).

7. The NIC of claim 5, wherein
the hash calculator is configured to obtain a table from the load balancer and divide the work requests into the first set of work requests for the first packets that hash to the first port, and the second set of work requests for the second packets that hash to the second port, using results of the hash function as applied to the table.

8. A method of managing resources in a network interface controller (NIC) in a computer, the method comprising:
supplying first traffic from first resources of the NIC;
supplying second traffic from second resources of the NIC;
balancing the first traffic and the second traffic between first and second port circuits of a link aggregation group (LAG) using a hash function;
dividing, using the hash function at remote direct memory access (RDMA) logic of the NIC, work requests into a first set of work requests for first packets that hash to the first port circuit and a second set of work request for second packets that hash to the second port circuit;
supplying the first set of work requests to the first resources; and
supplying the second set of work request to the second resources.

9. The method of claim 8, further comprising:
receiving first RDMA work via a first physical function of the NIC;
adding a portion of the first set of work requests for a portion of the first packets to a first group and adding a portion of the second set of work requests for a portion of the second packets to a second group;
receiving second RDMA work via a second physical function of the NIC; and
adding another portion of the first set of work requests for another portion of the first packets to a third group and adding another portion of the second set of work requests for another portion of the second packets to a fourth group;
wherein in particular the method further comprises
inputting the first and third groups to the first resources; and
inputting the second and fourth groups to the second resources.

10. The method of claim 8 or 9, comprising at least one of the following features (A) and (B):
(A) the first set of resources include a first queue configured to receive the first set of work requests and a first buffer configured to assemble the first packets based on the first set of work requests, and wherein the second resources include a second queue configured to receive the second set of work requests and a second buffer configured to assume the second packets based on the second set of work requests;.
and
(B) the RDMA logic includes a hash calculator configured to use the hash function to divide the work requests, wherein in particular
the hash calculator comprises firmware executed by a central processing unit (CPU) and/or
the hash calculator is configured to obtain a table from the load balancer and divide the work requests into the first set of work requests for the first packets that hash to the first port, and
the second set of work requests for the second packets that hash to the second port, using results of the hash function as applied to the table.

11. A computer, comprising:
a hardware platform including a central processing unit (CPU), memory, and a network interface controller (NIC); and
software executing on the hardware platform;
wherein the NIC includes:
first resources configured to supply first traffic;
second resources configured to supply second traffic;
a load balancer, coupled to the first and second resources, configured to balance the first traffic and the second traffic between first and second port circuits of a link aggregation group (LAG) using a hash function; and
remote direct memory access (RDMA) logic configured to, using the hash function, divide work requests from the software into a first set of work requests for first packets that hash to the first port circuit and a second set of work requests for second packets that hash to the second port circuit, the RDMA logic configured to supply the first set of work requests to the first resources and the second set of work requests to the second resources.

12. The computer of claim 11, further comprising:
a bus configured to couple the NIC to the CPU and the memory;
wherein the NIC further includes a bus interface, coupled to the bus, having a first physical function and a second physical function;
wherein the RDMA logic, in response to first RDMA work received via the first physical function, is configured to add a portion of the first set of work requests for a portion of the first packets to a first group and add a portion of the second set of work requests for a portion of the second packets to a second group; and
wherein the RDMA logic, in response to second RDMA work received via the second physical function, is configured to add another portion of the first set of work requests for another portion of the first packets to a third group and add another portion of the second set of work requests for another portion of the second packets to a fourth group.

13. The computer of claim 12, wherein
the first and third groups are configured to input to the first resources, and wherein
the second and fourth groups are configured to input to the second resources.

14. The computer of any one of the claims 11 to 13, wherein
the first set of resources include a first queue configured to receive the first set of work requests and a first buffer configured to assemble the first packets based on the first set of work requests, and wherein the second resources include a second queue configured to receive the second set of work requests and a second buffer configured to assume the second packets based on the second set of work requests.

15. The computer of any one of the claims 11 to 14, wherein
the RDMA logic includes a hash calculator configured to use the hash function to divide the work requests;
wherein in particular
the hash calculator comprises firmware executed by another central processing unit (CPU) of the NIC.
